# FASCICULE DE BREVET EUROPEEN

(11) **EP 2 926 435 B1**
(45) Date de publication et mention de la délivrance du brevet: **04.01.2017**
(21) Numéro de dépôt: 13794935.0
(22) Date de dépôt: 22.11.2013
(51) Int. Cl.: G05B 15/02, G05B 19/05, G05F 1/66, H02J 13/00, G05B 19/042

(54) **ORGANE ELECTRIQUE GENERIQUE CONFIGURABLE**
GENERISCHES KONFIGURIERBARES ELEKTRISCHES BAUTEIL
GENERIC CONFIGURABLE ELECTRIC PART

(30) Priorité: 28.11.2012 FR 1203215
(43) Date de publication de la demande: 07.10.2015
(73) Titulaire: Safran Electronics & Defense, 92100 Boulogne-Billancourt (FR)
(72) Inventeur: PRATA, Antonio, F-92100 Boulogne-Billancourt (FR); LE BAIL, Damien, F-92100 Boulogne-Billancourt (FR); MANCA, Jean-Luc, F-92100 Boulogne-Billancourt (FR)
(74) Mandataire: Lavialle, Bruno François Stéphane
(86) Numéro de dépôt international: PCT/EP2013/074514
(87) Numéro de publication internationale: WO 2014/082936

(56) Documents cités:
- EP-A1- 1 449 095
- US-A- 6 107 696
- US-A1- 2002 108 006
- US-A1- 2005 154 475
- US-A9- 2004 027 254

## Description

L'invention concerne un organe électrique générique configurable comportant des moyens de traitement pour mettre en oeuvre au moins une fonction configurée afin de générer des signaux de sortie à destination d'au moins un équipement électrique.

### ARRIERE PLAN DE L'INVENTION

Le développement de l'avion « plus électrique » est un des enjeux majeurs des politiques de recherche et d'innovation mises en oeuvre par l'industrie aéronautique. L'énergie électrique offre de nombreux avantages par rapport à l'énergie mécanique, hydraulique ou pneumatique, parmi lesquels une intégration des équipements améliorée, des coûts de maintenance réduits, une simplification d'utilisation, une réduction de masse, etc.

Les grands programmes civils ou militaires représentent des opportunités pour introduire des évolutions technologiques permettant de remplacer des systèmes traditionnels par des systèmes électriques. On peut citer parmi les évolutions les plus marquantes l'introduction de commandes de vol électriques sur Airbus A320, l'inverseur de poussée électrique sur Airbus A380, le frein électrique sur Boeing 787, etc.

Le développement des systèmes électriques a entraîné une multiplication des actionneurs électromécaniques qui, pour fonctionner, nécessitent notamment des organes de commande et des organes de conversion de puissance. Les organes de commande sont utilisés pour piloter des onduleurs associés aux moteurs électriques des actionneurs électromécaniques, en fonction de consignes et de mesures diverses (position du rotor, vitesse angulaire, etc.). Les organes de conversion de puissance, quant à eux, sont utilisés pour fournir des tensions d'alimentation continue (28 Volts par exemple) ou alternative (115/230 Volts - 400 Hertz par exemple) aux équipements électriques. Ces organes de commande et de conversion mettent généralement en oeuvre des asservissements qui nécessitent d'acquérir des mesures réalisées par des capteurs de position linéaire ou angulaire, de vitesse, de courant, de tension, etc.

Chaque application requiert des organes de commande et des organes de conversion de puissance ayant un certain nombre de caractéristiques dépendant de l'application (élaboration des lois de commande, valeur ou fréquence de tension en sortie, etc.). Pour chaque nouvelle application, il est donc nécessaire de réaliser de nouveaux équipements, ce qui représente un coût important en termes de développement, de certification et de fabrication des équipements, et introduit des incertitudes quant à la performance de ces nouveaux équipements en termes de sécurité et de fiabilité.

On identifie enfin le document US 2004/027254 A9 publié le 12 février 2004 qui décrit un système de contrôle électrique utilisé pour des applications nécessitant de réaliser des opérations de traitement rapide, par exemple pour le contrôle d'un moteur électrique. Ce système de contrôle comporte une unité centrale (« master control arrangement »), ainsi qu'une unité d'application (« application control arrangement ») dans laquelle sont configurés des blocs fonctionnels. L'unité centrale pilote l'unité d'application en paramétrant les blocs fonctionnels et en les interconnectant.

### OBJET DE L'INVENTION

L'invention a pour objet de réduire les coûts et les durées de développement des systèmes électriques tout en améliorant leur fiabilité.

### RESUME DE L'INVENTION

En vue de la réalisation de ce but, on propose un organe électrique générique configurable comportant des moyens de traitement pour mettre en oeuvre au moins une fonction configurée afin de générer des signaux de sortie à destination d'au moins un équipement électrique. Selon l'invention, les moyens de traitement comportent une unité de traitement rapide et une unité de traitement lent dans lesquelles sont implémentés des blocs fonctionnels agencés pour effectuer respectivement des opérations relativement rapides et des opérations relativement lentes. Les blocs fonctionnels sont indépendants et paramétrables et les unités de traitement sont configurables pour sélectivement paramétrer et interconnecter les blocs fonctionnels de manière à réaliser la fonction configurée.

Ainsi, il est possible d'utiliser un organe électrique déjà développé, qualifié et certifié pour réaliser une nouvelle fonction, en reconfigurant les unités de traitement. Ceci permet de : réduire les coûts de conception, car les blocs fonctionnels, déjà réalisés, sont réutilisés ; réduire les coûts associés aux activités de validation, vérification, certification, car celles-ci, pour la nouvelle fonction, ne concernent que les nouveaux paramétrages et nouvelles interconnections ; et réduire les incertitudes quant aux performances de l'équipement, car les performances des unités de traitement et des blocs fonctionnels ont déjà été éprouvées.

L'invention sera mieux comprise à la lumière de la description qui suit d'un mode de mise en oeuvre particulier non limitatif de l'invention.

### BREVE DESCRIPTION DES DESSINS

Il sera fait référence aux dessins annexés, parmi lesquels :
- la figure 1 représente schématiquement un organe électrique générique configurable de l'invention ;
- la figure 2 représente des blocs fonctionnels implémentés dans un FPGA et dans un microcontrôleur de l'organe électrique de l'invention ;
- la figure 3 représente ces mêmes blocs rangés selon des fonctions dans lesquelles ils sont utilisés ;
- la figure 4 représente un agencement de blocs fonctionnels pour mettre en oeuvre une fonction de commande d'un moteur électrique d'un actionneur électromécanique ;
- la figure 5 représente un agencement de blocs fonctionnels pour mettre en oeuvre une fonction de conversion de tension continue/continue.

### DESCRIPTION DETAILLEE DE L'INVENTION

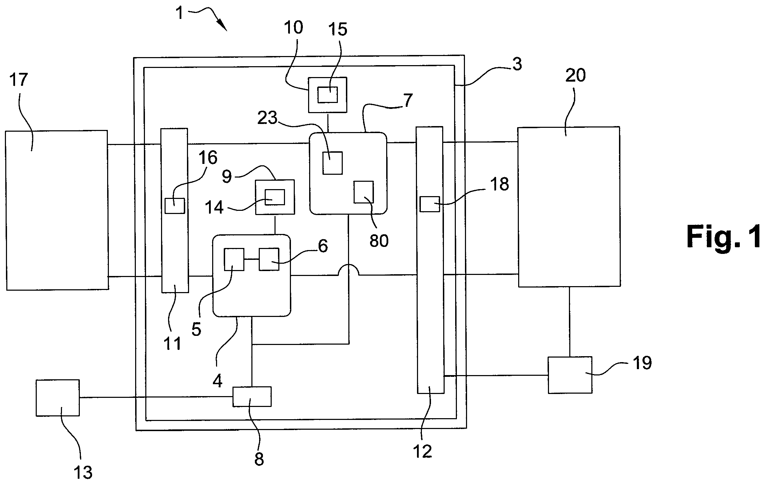

En référence à la figure 1, un organe électrique générique 1 configurable de l'invention comprend un boîtier 2 dans lequel est montée au moins une carte électrique 3. Cette carte électrique 3 comporte des composants électriques parmi lesquels un FPGA 4 (pour « Field-Programmable Gate Array », qui peut être traduit en français par « réseau prédiffusé programmable ») comprenant un espace de mémoire vive 5 relié à une mémoire non volatile 6 intégrée au FPGA, un microcontrôleur 7 comprenant un processeur 80 et une zone de mémoire non volatile 23, un module d'alimentation 8, des composants d'horloge 9, 10, des composants d'interface de communication 11, et des composants d'interface d'acquisition analogique 12.

Le module d'alimentation 8 de la carte électrique 3 est connecté à une source d'alimentation externe 13 et est agencé pour alimenter les composants de la carte électrique 3 en fournissant une ou plusieurs tensions d'alimentation appropriées. Les composants d'horloge 9, 10 comprennent deux oscillateurs à quartz 14, 15, dont l'un 14 fournit un signal d'horloge stabilisé au FPGA 4 et l'autre 15 au microcontrôleur 7. Les composants d'interface de communication 11, qui comprennent notamment un composant émetteur-récepteur 16 d'une liaison de type liaison ARINC429 par exemple, ou tout autre type de liaison, sont utilisés pour mettre en forme des signaux numériques échangés entre le FPGA 4, le microcontrôleur 7 et un premier ensemble d'équipements externes 17 à l'organe électrique 1. Les composant d'interface d'acquisition analogique 12, qui comprennent au moins un convertisseur analogique-numérique 18, sont agencés pour permettre au FPGA 4 et au microcontrôleur 7 d'avoir accès à des mesures réalisées par un ensemble de capteurs externes 19 connectés à un deuxième ensemble d'équipements externes 20, ou à des signaux analogiques (courants, tensions) provenant directement de ce deuxième ensemble d'équipements externes 20.

L'organe électrique 1 de l'invention peut être configuré pour réaliser une fonction de contrôle / commande, par exemple une fonction de commande d'un moteur électrique d'un actionneur électromécanique, ou une fonction de conversion de puissance permettant de convertir une tension continue ou alternative en une tension continue ou alternative (on pourrait alors avoir une conversion continue - continue, continue - alternative, alternative - alternative ou alternative - continue).

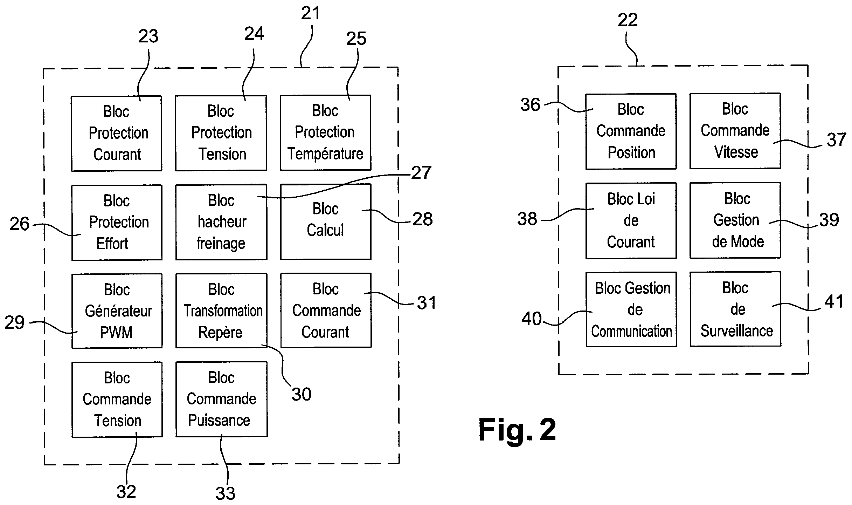

Dans ce but, des blocs fonctionnels, visibles à la figure 2, sont implémentés dans le FPGA 4 et le microcontrôleur 7. Par « implémentés », on entend que ces blocs fonctionnels sont codés par des codes programmés rangés dans des zones de mémoire associés aux FPGA et au microcontrôleur, et exécutés par le FPGA et le processeur 80 du microcontrôleur pour réaliser des opérations. Pour un FPGA, l'exécution consiste à assembler des cellules logiques élémentaires qui le composent, et donc à implanter physiquement une fonction logique. Pour un microcontrôleur, l'opération est réalisée par la mise en oeuvre d'instructions logicielles au sein d'une architecture matérielle figée.

Chaque bloc fonctionnel est prévu pour réaliser une opération. Ces blocs fonctionnels sont indépendants, c'est-à-dire qu'ils n'ont pas besoin d'être associés à d'autres blocs pour réaliser l'opération pour laquelle ils sont prévus. Ces blocs sont de plus paramétrables, c'est-à-dire qu'il est possible d'adapter l'opération réalisée à la fonction prévue, par exemple en modifiant des valeurs de seuils, de tension de sortie, de fréquence, etc.

Parmi les blocs fonctionnels, on trouve par exemple un ensemble 22 de blocs fonctionnels réalisant des opérations relativement lentes, implémentés dans le microcontrôleur 7, et un ensemble 21 de blocs fonctionnels réalisant des opérations relativement rapides, implémentés dans le FPGA 4. Les circuits logiques programmables permettent en effet de réaliser des opérations plus rapides, car leur structure en cellules logiques élémentaires assemblables permet d'une part, d'obtenir des temps de propagation de signaux très faibles et d'autre part, de réaliser plusieurs opérations élémentaires en parallèle.

Les blocs fonctionnels 21 du FPGA 4, non paramétrés, sont stockés dans la mémoire non volatile interne6 du FPGA. Les blocs fonctionnels du microcontrôleur 7, non paramétrés, sont stockés dans la zone de mémoire non volatile 23 du microcontrôleur 7. Pour définir la fonction réalisée par l'organe électrique 1, un utilisateur doit entrer un programme de configuration constitué d'une suite d'instructions logicielles dans la zone de mémoire non volatile 23 du microcontrôleur 7. Le rôle de ce programme de configuration est de paramétrer les blocs fonctionnels 22 du microcontrôleur 7, de charger une séquence de paramétrage dans l'espace de mémoire vive 5 du FPGA 4 pour paramétrer les blocs fonctionnels 21 du FPGA 4, d'interconnecter les blocs fonctionnels 21, 22 paramétrés du FPGA 4 et du microcontrôleur 7, de manière à réaliser les opérations lentes et rapides constitutives de la fonction souhaitée.

Les blocs fonctionnels 21 implémentés dans le FPGA 4 comprennent :
- un bloc de protection en courant 23, un bloc de protection en tension 24, un bloc de protection en température 25, un bloc de protection en effort 26, qui sont agencés de façon connue en elle-même pour protéger l'organe électrique ou des équipements ou capteurs externes contre des niveaux trop importants de ces paramètres ;
- un bloc hacheur de freinage 27, qui est agencé pour gérer une dissipation d'énergie lors d'un freinage d'un moteur électrique ;
- un bloc de calcul 28, qui est agencé pour déduire des valeurs de paramètres mesurés en fonction d'un courant ou d'une tension fournis par des capteurs et représentatifs des paramètres ;
- un bloc générateur PWM 29 (pour Pulse Width Modulation), qui est agencé pour générer un signal de rapport cyclique variable pour piloter un onduleur de moteur électrique ;
- un bloc de transformation de repère 30, qui, selon la manière dont il est paramétré, est agencé pour assurer une transformation d'un repère fixe lié au stator d'un moteur électrique à un repère tournant lié au rotor du moteur ou inversement, ou d'un repère triphasé à un repère biphasé ou inversement ;
- un bloc de commande de courant 31, un bloc de commande de tension 32, un bloc de commande de puissance 33 qui, à partir d'une consigne en courant, en tension ou en puissance, sont agencés pour fournir une commande pour commander ce courant, cette tension ou cette puissance.

Les blocs fonctionnels 22 implémentés dans le microcontrôleur 7 comprennent :
- un bloc de commande de position 36, qui est agencé pour fournir une consigne de vitesse d'un moteur électrique en fonction d'une consigne de position et d'une position réelle du rotor du moteur ;
- un bloc de commande de vitesse 37, qui est agencé pour fournir une consigne de couple moteur en fonction d'une consigne de vitesse et d'une vitesse réelle du rotor du moteur ;
- un bloc de loi de courant 38, qui est agencé pour fournir une commande en courant à partir d'une consigne quelconque ;
- un bloc de gestion de mode 39, qui est agencé pour gérer différents modes d'un équipement, comme son arrêt, son fonctionnement dans un mode nominal, dégradé ou de maintenance, etc. ;
- un bloc de gestion de communication 40, qui est agencé pour mettre en oeuvre des échanges de données entre le microcontrôleur et un équipement extérieur ou un autre composant de l'organe électrique ;
- un bloc de surveillance 41, qui est agencé pour analyser divers signaux et détecter une anomalie de fonctionnement d'un composant de l'organe électrique ou d'équipements ou de capteurs externes.

Les blocs en question sont connus en eux-mêmes.

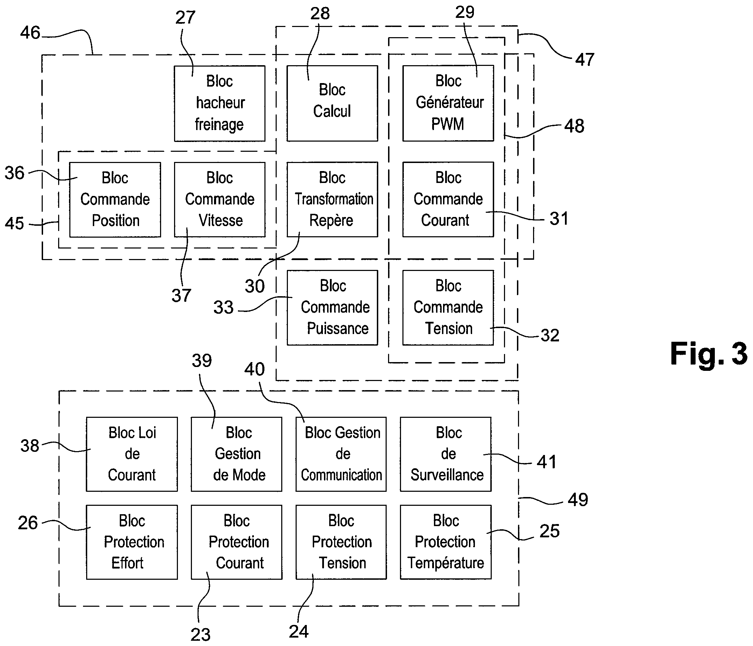

A la figure 3, les blocs fonctionnels sont cette fois rangés en définissant un premier ensemble 45 de blocs utilisables lorsque l'organe électrique est configuré pour réaliser une fonction de commande de moteur, un deuxième ensemble 46 de blocs utilisables lorsque l'organe électrique est configuré pour réaliser une fonction de conversion de puissance continue/alternative ou en organe de commande de moteur, un troisième ensemble 47 pour une conversion alternative/continue ou continue/alternative, un quatrième ensemble 48 pour une conversion continue/continue, un cinquième ensemble 49 de blocs contenant des blocs pouvant être utilisés pour toutes ces fonctions.

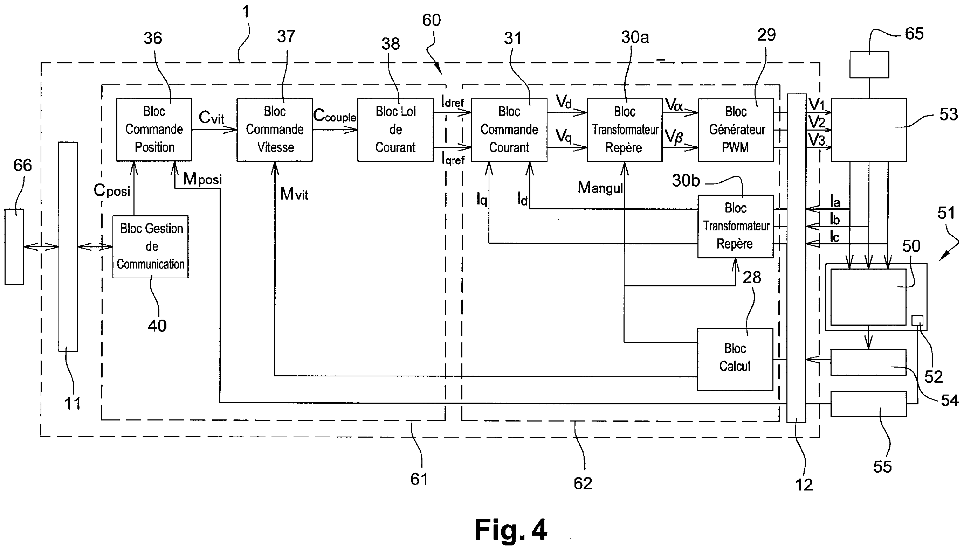

On décrit maintenant un agencement particulier de blocs fonctionnels, visible à la figure 4, permettant d'utiliser un organe électrique 1 dans une application de commande d'un moteur électrique 50 synchrone sans balais à aimant permanent d'un actionneur électromécanique 51. Cet actionneur électromécanique 51 permet de déplacer linéairement une tige 52 de verrou électromécanique. Ce type de verrou peut être utilisé pour verrouiller des inverseurs de poussée en vol dans le but d'éviter qu'ils ne s'ouvrent intempestivement.

L'organe électrique 1 est commandé par un organe de commande 66 pour piloter le moteur 50 et positionner la tige 52 de l'actionneur 51 en fonction d'une consigne de position Cposi transmise au microcontrôleur 7 via les composants d'interface de communication 11 et un bloc de gestion de communication 40. L'organe électrique est de plus connecté, via les composants d'interface d'acquisition analogique 12, à un onduleur 53 pilotant le moteur électrique 50, ainsi qu'à un capteur de position angulaire 54 du rotor du moteur électrique 50, ici un capteur de type résolveur, et à un capteur de position linéaire 55 de la tige 52. L'onduleur 53 est alimenté par une source de tension continue 65.

Outre le bloc de gestion de communication 40, les blocs fonctionnels implémentés dans le microcontrôleur comprennent un bloc de commande de position 36, un bloc de commande de vitesse 37, un bloc de loi de courant 38.

Les blocs fonctionnels implémentés dans le FPGA comprennent un bloc de commande de courant 31, un premier bloc de transformation de repère 30a paramétré pour passer d'un repère tournant lié au rotor du moteur à un repère fixe lié au stator du moteur, un deuxième bloc de transformation de repère 30b paramétré pour passer d'un repère triphasé à un repère biphasé, un bloc générateur PWM 29, un bloc de calcul 28.

La consigne de position Cposi de la tige 52 est transmise au bloc de commande de position 36, qui reçoit aussi la position réelle Mposi de la tige 52, mesurée par le capteur de position linéaire 55. En fonction de la consigne de position Cposi et de la position réelle mesurée Mposi de la tige 52, le bloc de commande de position 36 fournit une consigne de vitesse Cvit au bloc de commande de vitesse 37. Le bloc de commande de vitesse 37 transmet au bloc de loi de courant 38 une commande en couple Ccouple déterminée en fonction de la consigne de vitesse Cvit et d'une vitesse de rotation réelle Mvit du rotor, générée par le bloc de calcul 28 à partir de mesures réalisées par le capteur de position angulaire 54. A partir de la commande en couple Ccouple, le bloc de loi de courant 38 génère une commande biphasée en courant Idref, Iqref dans un repère tournant lié au rotor du moteur, et la transmet au bloc de commande de courant 31. Le deuxième bloc de transformation 30b acquiert un courant triphasé Ia, Ib, Ic en sortie de l'onduleur 53, et une position angulaire du rotor mesurée Mangul, fournie par le bloc de calcul 28. Le bloc de commande de courant 31, à partir de la consigne Idref, Iqref et d'une valeur de courant Id, Iq transmise par le deuxième bloc de transformation 30b, fournit au premier bloc de transformation 30a une tension biphasée Vd, Vq dans le repère tournant. Le premier bloc de transformation 30a, qui acquiert aussi la position angulaire du rotor mesurée Mangul, génère alors une tension biphasée Vα,Vβ dans le repère fixe à destination du bloc générateur PWM 29. Le bloc générateur PWM 29 génère alors une tension triphasée V1, V2, V3 à l'onduleur 53 pour le piloter. L'onduleur 53 alimente alors le moteur 50 à partir de la source de tension continue 65.

On a ainsi formé une boucle de régulation 60 composée d'une boucle lente 61 et d'une boucle rapide 62, la durée d'exécution de la boucle lente 61 étant comprise entre 500 microsecondes et 10 millisecondes, et la durée d'exécution de la boucle rapide 62 étant proche de 25 microsecondes.

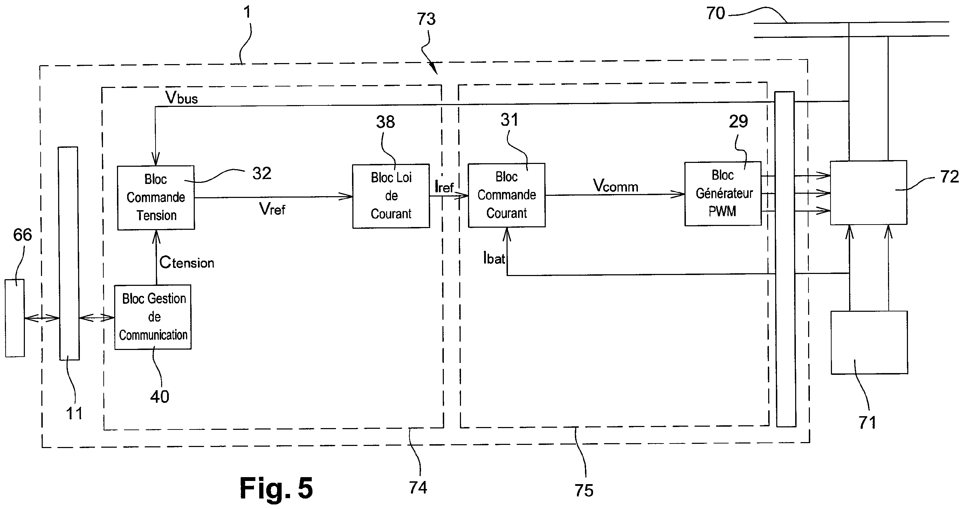

On décrit maintenant un agencement particulier de blocs fonctionnels, visible à la figure 5, permettant d'utiliser un organe électrique 1 dans une fonction de conversion de tension continue/continue pour fournir à un bus 70 d'un réseau électrique une tension continue de bus Vbus à partir d'une tension continue Vbat fournie par une batterie 71. L'organe électrique 1 est commandé par un organe de commande 66 qui fournit au microcontrôleur 7, via les composants d'interface de communication 11 et un bloc de gestion de communication 40, une consigne de tension continue Ctension. L'organe électrique 1 est aussi connecté, via les composants d'interface d'acquisition analogique 12, à un onduleur 72 alimenté par la batterie 71.

Outre le bloc de gestion de communication 40, les blocs fonctionnels implémentés dans le microcontrôleur comprennent un bloc de commande de tension 32 et un bloc de loi de courant 38.

Les blocs fonctionnels implémentés dans le FPGA comprennent un bloc de commande de courant 31 et un bloc générateur PWM 29.

En fonction de la consigne de tension Ctension et de la tension de bus Vbus, le bloc de commande de tension 32 transmet une tension de référence Vref au bloc de loi de courant 38. Le bloc 38 fournit un courant Iref au bloc de commande de courant 31, qui, à partir de la valeur du courant Iref et du courant Ibat fourni par la batterie 71, génère à destination du bloc générateur PWM 29 une tension de commande Vcomm. Le bloc générateur PWM génère alors une tension triphasée V1, V2, V3 permettant de piloter l'onduleur 72 pour que ce dernier fournisse la tension de bus Vbus à partir de la tension Vbat de la batterie 71.

On a à nouveau formé une boucle de régulation 73 composée d'une boucle lente 74 et d'une boucle rapide 75.

L'invention n'est pas limitée aux modes de réalisation particuliers qui viennent d'être décrits, mais, bien au contraire, couvre toute variante entrant dans le cadre de l'invention telle que définie par les revendications.

Bien que l'on ait choisi d'illustrer l'invention en utilisant un microcontrôleur et un FPGA de type SRAM, il est possible de remplacer ce microcontrôleur par tout type de composant comprenant un processeur, et de remplacer le FPGA par tout type de composant logique programmable.

La liste des blocs fonctionnels présentés aux figures 2 et 3 n'est bien sûr pas exhaustive. En outre, les fonctions de commande et de conversion présentées peuvent parfaitement être mises en oeuvre avec des blocs supplémentaires ou des blocs différents.

De même, la liste des composants présents sur la carte électrique de l'organe électrique n'est, elle non plus, pas exhaustive. Il est aussi possible de prévoir de monter ces composants sur plusieurs cartes électriques.

## Revendications

1. Organe électrique générique configurable comportant des moyens de traitement pour mettre en oeuvre au moins une fonction configurée afin de générer des signaux de sortie à destination d'au moins un équipement électrique (20, 53, 72), **caractérisé en ce que** les moyens de traitement comportent une unité de traitement rapide (4) et une unité de traitement lent (7) dans lesquelles sont implémentés des blocs fonctionnels (23-33, 36-41) agencés pour effectuer respectivement des opérations relativement rapides et des opérations relativement lentes, **en ce que** les blocs fonctionnels (23-33, 36-41) sont indépendants et paramétrables et **en ce que** les unités de traitement (4, 7) sont configurables pour sélectivement paramétrer et interconnecter les blocs fonctionnels (23-33, 36-41) de manière à réaliser la fonction configurée.

2. Organe électrique générique configurable selon la revendication 1, dans lequel les unités de traitement (4, 7) sont agencées pour mettre en oeuvre une fonction de commande d'un moteur électrique (50) et les signaux de sortie comprennent des signaux de commande générés par la fonction à partir d'une consigne et de mesures de paramètres de fonctionnement du moteur.

3. Organe électrique générique configurable selon la revendication 1, dans lequel les unités de traitement (4, 7) sont agencées pour mettre en oeuvre une fonction de conversion d'une tension continue ou alternative en une tension continue ou alternative et les signaux de sortie comprennent une tension de sortie continue ou alternative.

4. Organe électrique générique configurable selon la revendication 1, dans lequel l'unité de traitement rapide (4) comprend au moins un FPGA (4).

5. Organe électrique générique configurable selon la revendication 1, dans lequel l'unité de traitement lent (7) comprend un microcontrôleur (7) mettant en oeuvre des moyens logiciels.

6. Organe électrique générique configurable selon la revendication 1, dans lequel les blocs fonctionnels (23-33, 36-41) comportent au moins un bloc de commande (31-33, 36, 37).

7. Organe électrique générique configurable selon la revendication 1, dans lequel les blocs fonctionnels comportent au moins un bloc de protection (23-26).

8. Organe électrique générique configurable selon la revendication 1, dans lequel les blocs fonctionnels comportent au moins un bloc de calcul (28).

9. Organe électrique générique configurable selon la revendication 1, dans lequel les blocs fonctionnels (23-33, 36-41) comportent un bloc de transformation (30) pour passer d'un repère fixe lié au stator d'un moteur électrique à un repère tournant lié au rotor du moteur, ou pour passer d'un repère tournant à un repère fixe.

10. Organe électrique générique configurable selon la revendication 1, dans lequel les blocs fonctionnels (23-33, 36-41) comportent un bloc de transformation (30) pour passer d'un repère biphasé à un repère triphasé ou d'un repère triphasé à un repère biphasé.

## Patentansprüche

1. Konfigurierbares generisches elektrisches Bauteil, umfassend Verarbeitungsmittel zum Ausführen mindestens einer konfigurierten Funktion, um Ausgangssignale für mindestens eine elektrische Ausrüstung (20, 53, 72) zu erzeugen, **dadurch gekennzeichnet, dass** die Verarbeitungsmittel eine Einheit (4) zur schnellen Verarbeitung und eine Einheit (7) zur langsamen Verarbeitung umfassen, in denen Funktionsblöcke (23-33, 36-41) implementiert sind, die so ausgebildet sind, dass sie relativ schnelle Operationen bzw. relativ langsame Operationen ausführen, dass die Funktionsblöcke (23-33, 36-41) unabhängig und parametrierbar sind und dass die Verarbeitungseinheiten (4, 7) konfigurierbar sind, um die Funktionsblöcke (23-33, 36-41) derart selektiv zu parametrieren und miteinander zu verbinden, dass die konfigurierte Funktion realisiert wird.

2. Konfigurierbares generisches elektrisches Bauteil nach Anspruch 1, wobei die Verarbeitungseinheiten (4, 7) so ausgebildet sind, dass sie eine Steuerfunktion eines Elektromotors (50) ausführen und die Ausgangssignale Steuersignale umfassen, die von der Funktion aus einem Sollwert und Funktionsparametermessungen des Motors erzeugt werden.

3. Konfigurierbares generisches elektrisches Bauteil nach Anspruch 1, wobei die Verarbeitungseinheiten (4, 7) so ausgebildet sind, dass sie eine Umwandlungsfunktion von einer Gleich- oder Wechselspannung in eine Gleich- oder Wechselspannung ausführen und die Ausgangssignale eine Ausgangsgleich- oder -Wechselspannung umfassen.

4. Konfigurierbares generisches elektrisches Bauteil nach Anspruch 1, wobei die Einheit (4) zur schnellen Verarbeitung mindestens ein FPGA (4) umfasst.

5. Konfigurierbares generisches elektrisches Bauteil nach Anspruch 1, wobei die Einheit (7) zur langsamen Verarbeitung einen Mikrocontroller (7) umfasst, der Softwaremittel einsetzt.

6. Konfigurierbares generisches elektrisches Bauteil nach Anspruch 1, wobei die Funktionsblöcke (23-33, 36-41) mindestens einen Steuerblock (31-33, 36, 37) umfassen.

7. Konfigurierbares generisches elektrisches Bauteil nach Anspruch 1, wobei die Funktionsblöcke mindestens einen Schutzblock (23-26) umfassen.

8. Konfigurierbares generisches elektrisches Bauteil nach Anspruch 1, wobei die Funktionsblöcke mindestens einen Rechenblock (28) umfassen.

9. Konfigurierbares generisches elektrisches Bauteil nach Anspruch 1, wobei die Funktionsblöcke (23-33, 36-41) einen Transformatiorysblock (30) umfassen, um von einem ortsfesten Bezugssystem, das mit dem Stator eines Elektromotors verbunden ist, zu einem rotierenden Bezugssystem überzugehen, das mit dem Rotor des Motors verbunden ist, oder um von einem rotierenden Bezugssystem zu einem ortsfesten Bezugssystem überzugehen.

10. Konfigurierbares generisches elektrisches Bauteil nach Anspruch 1, wobei die Funktionsblöcke (23-33, 36-41) einen Transformationsblock (30) umfassen, um von einem zweiphasigen Bezugssystem zu einem dreiphasigen Bezugssystem oder von einem dreiphasigen Bezugssystem zu einem zweiphasigen Bezugssystem überzugehen.

## Claims

1. A configurable generic electrical member comprising processor means for performing at least one configured function in order to generate output signals for at least one piece of electrical equipment (20, 53, 72), the member being **characterized in that** the processor means comprise a fast processor unit (4) and a slow processor unit (7) in which functional blocks (23-33, 36-41) are implemented, which blocks are arranged respectively to perform relatively fast operations and relatively slow operations, **in that** the functional blocks (23-33, 36-41) are independent and parameterizable, and **in that** the processor units (4, 7) are configurable to parameterize and interconnect the functional blocks (23-33, 36-41) selectively in such a manner as to perform the configured function.

2. A configurable generic electrical member according to claim 1, wherein the processor units (4, 7) are arranged to perform a function of controlling an electric motor (50) and the output signals comprise control signals generated by the function on the basis of a setpoint and measurements of operating parameters of the motor.

3. A configurable generic electrical member according to claim 1, wherein the processor units (4, 7) are arranged to perform a function of converting a DC or an AC voltage into a DC or an AC voltage, and the output signals comprise an output DC or AC voltage.

4. A configurable generic electrical member according to claim 1, wherein the fast processor unit (4) comprises at least one FPGA (4).

5. A configurable generic electrical member according to claim 1, wherein the slow processor unit (7) comprises a microcontroller (7) using software means.

6. A configurable generic electrical member according to claim 1, wherein the functional blocks (23-33, 36-41) include at least one control block (31-33, 36, 37).

7. A configurable generic electrical member according to claim 1, wherein the functional blocks include at least one protection block (23-26).

8. A configurable generic electrical member according to claim 1, wherein the functional blocks include at least one calculation block (28).

9. A configurable generic electrical member according to claim 1, wherein the functional blocks (23-33, 36-41) comprise a transformer block (30) for transforming from a stationary reference frame associated with the stator of an electric motor to a rotary reference frame associated with the rotor of the motor, or for transforming from a rotary reference frame to a stationary reference frame.

10. A configurable generic electrical member according to claim 1, wherein the functional blocks (23-33, 36-41) comprise a transformer block (30) for passing from a two-phase reference frame to a three-phase reference frame or from a three-phase reference frame to a two-phase reference frame.
